# EUROPEAN PATENT APPLICATION

(11) **EP 3 919 459 A1**
(43) Date of publication of application: **08.12.2021**
(21) Application number: 20177687.9
(22) Date of filing: 01.06.2020
(51) Int. Cl.: C04B 20/02, C04B 24/26, C04B 38/02, C04B 38/10, C04B 103/52

(54) **COMPOSITION FOR AERATED OR LIGHTWEIGHT CONCRETE**

(71) Applicant: Coatex, 69730 Genay (FR)
(72) Inventor: LIU, Haifeng, Suzhou City, Shanghai (CN); XIAO, Deyan, Shanghai, 201208 (CN)
(74) Representative: Balmefrezol, Ludovic Francis Pierre

(57) **Abstract**

The invention relates to the field of aqueous compositions for preparing special concretes like aerated concrete or lightweight concrete. The invention provides an aqueous composition for preparing such concretes, that combines water, a hydraulic binder and an aggregate that is ground in the presence of a particular anionic polymer. The ground aggregate is selected from slag, fly ash, sand and combinations thereof. The invention also relates to a method for preparing this composition and to methods using it.

## Description

The invention relates to the field of aqueous compositions for preparing special concretes like aerated concrete or lightweight concrete. The invention provides an aqueous composition for preparing such concretes, that combines water, a hydraulic binder and an aggregate that is ground in the presence of a particular anionic polymer. The ground aggregate is selected from slag, fly ash, sand and combinations thereof. The invention also relates to a method for preparing this composition and to methods using it.
Aerated concrete and lightweight concrete possess specific and improved properties in comparison to classical concretes. Aerated concrete and lightweight concrete are materials that are particularly useful as heat-insulating materials. These materials are also known as sound-absorbing materials. Aerated concrete and lightweight concrete also allow manufacturing various concrete items having improved properties, notably a reduced weight or an improved mechanical strength. During their specific manufacturing process, an important amount of gas is incorporated into the solid structure deriving from the use of classical materials, notably an aggregate and a hydraulic binder. The gas that are incorporated within concretes are normally air or hydrogen.
Aerated concrete and lightweight concrete are usually prepared starting from an aqueous suspension of the various particulate materials, in particular an aggregate and a hydraulic binder. Compositions for preparing aerated concrete usually further comprise an expansion agent combined with lime or combined with a lime comprising material. Compositions for preparing lightweight concrete usually further comprise a foaming agent or an air-entraining agent. During the preparation method of the aerated concrete or of the lightweight concrete, these further ingredients generate a gas that incorporates within the concrete structure.
During these preparation methods, and notably during gas expansion, the particulate materials should be well dispersed and they should not form aggregates of particles. In addition, the particle size of these particulate materials should be well controlled thus avoiding generating problems for the resulting concrete. Poor dispersion of the particulate materials, reduced workability of the resulting concrete, segregation or bleeding of the concrete that could lead to mechanical strength losses should be avoided.

For the preparation of aerated concrete and lightweight concrete, the particulate materials that are employed, notably an aggregate, are ground previous to their incorporation into the aqueous composition used for preparing these concretes. During the grinding process of the aggregate, the control of the grinding duration and the control of the particle size are of particular importance. Controlling the viscosity or the flowability and increasing the solid rate during or after grinding of these materials are also very important.
Methods of preparation of aqueous compositions for preparing aerated concrete or lightweight concrete of the prior art do not provide efficient solutions to these problems. There is thus a need for improved methods of preparation of such compositions.
The invention provides a method for preparing an aqueous composition for preparing aerated concrete or for preparing lightweight concrete, that allows resolving totally or partially the problems encountered with the methods of the prior art.
The invention thus provides an aqueous composition (C) for preparing aerated concrete or for preparing lightweight concrete, comprising:
- water,
- at least one aggregate (A) comprising a silicon dioxide comprising material that is ground in the presence of at least one polymer (P) having a molecular weight Mw (measured by SEC) of less than 20,000 g/mol and a polymolecularity index (PI) of less than 3.5, and that is prepared by a radical polymerisation reaction in water or in a solvent, at a temperature that is equal or higher than 20°C, of at least one anionic monomer (M) comprising at least one polymerisable olefinic unsaturation and a carboxylic acid group, in the presence of at least one radical-generating compound selected from hydrogen peroxide, ammonium persulfate, tertiobutyl hydroperoxide, an alkaline metal persulfate, optionally associated with an ion selected from Fe^{II}, Fe^{III}, Cu^{I}, Cu^{II} and combinations thereof, optionally combined with at least one compound selected from sodium bisulfite, potassium bisulfite, ammonium bisulfite, sodium hypophosphite, potassium hypophosphite, ammonium hypophosphite, disodium 2,2'-(thiocarbonylbisthio)dipropanoate (DPTTC) and combinations thereof and
- at least one hydraulic binder (B).
An essential feature of the composition according to the invention is that aggregate (A) comprised therein is ground previous to its incorporation into composition (C). Preferably, according to the invention, aggregate (A) is wet grinded. Generally, wet grinding of aggregate (A) is conducted in combination with water, thus in the form of an aqueous suspension of aggregate (A) in water.
According to the invention, grinding of aggregate (A) is carried out in the presence of at least one polymer (P).
Preferably, according to the invention, composition (C) comprises an aggregate (A) that is ground, preferably is wet ground, in the presence of at least one polymer (P), prior to its addition to the composition.
More preferably, aggregate (A) is ground with a sand mill, a roller mill or a bead mill. Also more preferably, according to the invention, aggregate (A) has an average particle size below 100 mesh (149 µm) or aggregate (A) has less than 15 wt.% of particles having an average particle size above 200 mesh (74 µm). Except otherwise indicated, any percentage expressed according to the invention is a weight percentage (wt.%).
During grinding of aggregate (A), polymer (P) generally allows increasing the solid content of the aqueous suspension in comparison to a grinding method in the absence of polymer (P). Polymer (P) also allows controlling the viscosity of the aqueous suspension during or after grinding. Additionally, polymer (P) allows controlling the flowability of the aqueous suspension during or after grinding.
Controlling the particle size of aggregate (A) is also permitted by the use of polymer (P) during grinding.
Preferably, the composition according to the invention comprises an aggregate (A) that comprises at least 10% by weight of silicon dioxide. Even preferably, aggregate (A) is a material selected from slag, fly ash, sand and combinations thereof. Most preferred aggregate (A) according to the invention is slag or fly ash.
More preferably, according to the invention, ground slag aggregate (A) has less than 13 wt.%, more preferably less than 12 wt.%, of particles having an average particle size above 200 mesh. Also more preferably, ground fly ash aggregate (A) has less than 7 wt.%, more preferably less than 6 wt.%, of particles having an average particle size above 200 mesh. Also more preferably, ground sand aggregate (A) has less than 11 wt.% of particles having an average particle size above 200 mesh.
Polymer (P) used during grinding of aggregate (A) comprised in composition (C) according to the invention is an essential feature. According to the invention, polymer (P) is prepared by a radical polymerisation reaction in water or in a solvent, at a temperature that is equal or higher than 20°C. According to the invention, polymer (P) can be prepared in a solvent, alone or in a mixture with water, particularly an alcoholic solvent, in particular isopropyl alcohol. Preferably polymer (P) is prepared in water. According to the invention, polymer (P) is prepared by a radical polymerisation reaction that is carried on at a temperature that is equal or higher than 20°C, and preferably, at a temperature that is equal or higher than 50°C.
According to the invention, polymer (P) has a molecular weight Mw (measured by SEC) of less than 20,000 g/mol. Preferably, according to the invention, polymer (P) has a weight-average molecular weight Mw of less than 15,000 g/mol or less than 7,500 g/mol, more preferably less than 6,500 g/mol, less than 6,000 g/mol, even more preferably less than 5,500 g/mol.
Also preferably, according to the invention, polymer (P) has a weight-average molecular weight Mw greater than 1,000 g/mol or greater than 1,200 g/mol or greater than 1,500 g/mol.
According to the invention, polymer (P) has a polymolecularity index (PI) (measured by SEC) of less than 3.5. Preferably, according to the invention, polymer (P) has a polymolecularity index (PI) of less than 3.2 or less than 3 or a polymolecularity index (PI) ranging from 1.5 to 3.5, more preferably from 1.5 to 3.2 or from 1.5 to 3.
According to the invention, molecular weight and polymolecularity index of the polymer is determined by Steric Exclusion Chromatography (SEC). This technique implements a Waters liquid chromatography apparatus equipped with a detector. This detector is a Waters refractive index detector. This liquid chromatography apparatus is equipped with a steric exclusion column in order to separate the various molecular weights of the polymer studied. The liquid elution phase is an aqueous phase adjusted to pH 9.00 using 1N of sodium hydroxide containing 0.05 M NaHCO₃, 0.1 M NaNO₃, 0.02 M triethanolamine and 0.03% NaN₃.
According to a first step, the polymer solution is diluted to 0.9% by dry weight in the solubilisation solvent of the SEC, which corresponds to the liquid elution phase of the SEC to which 0.04% of dimethyl formamide is added, which acts as a flow rate marker or internal standard. Then, it is filtered using a 0.2 µm filter. Then 100 µL are injected into the chromatograph (eluent: an aqueous phase adjusted to pH 9.00 using 1N sodium hydroxide containing 0.05 M of NaHCO₃, 0.1 M of NaNO₃, 0.02 M of triethanolamine and 0.03% of NaN₃).
The liquid chromatography apparatus has an isocratic pump (Waters 515) having a flow rate set to 0.8 mL/min. The chromatography apparatus also comprises an oven which itself comprises the following system of columns in series: a Waters Ultrahydrogel Guard precolumn 6 cm long and 40 mm in inner diameter, and a Waters Ultrahydrogel linear column 30 cm long and 7.8 mm in inner diameter. The detection system is comprised of a Waters 410 RI refractive index detector. The oven is heated to 60°C and the refractometer is heated to 45°C.
Molecular weight is assessed by detection of the dynamic light scattering using a Viscotek 270 dual detector to determine the molecular weight based on the hydrodynamic volume of the polymer.
The chromatography device is calibrated by means of powdered sodium polyacrylate standards of different molecular weights certified by the supplier: Polymer Standards Service or American Polymer Standards Corporation.
Polymer (P) according to the invention is prepared from at least one anionic monomer (M) comprising at least one polymerisable olefinic unsaturation and a carboxylic acid group. Preferably, according to the invention, anionic monomer (M) is selected from acrylic acid, methacrylic acid, an acrylic acid salt, a methacrylic acid salt and combinations thereof, preferably acrylic acid.
According to the invention, polymer (P) can be prepared with one or more monomers (M). Polymer (P) can also be prepared with one or more further monomers. Accordingly, the polymerisation reaction can be carried out with 100% by weight of anionic monomer (M). The polymerisation reaction can also be carried out with from 70% to 99.5% by weight of anionic monomer (M) and from 0.5% to 30% by weight of at least one further monomer. Preferably, according to the invention, the further monomer can be selected from another different anionic monomer selected from acrylic acid, methacrylic acid, itaconic acid, maleic acid, their salts, and combinations thereof.
Also preferably, according to the invention, the further monomer can be selected from a non-ionic monomer comprising at least one polymerisable olefinic unsaturation, preferably at least one polymerisable ethylenic unsaturation and notably a polymerisable vinyl group, more preferably a non-ionic monomer selected from the esters of an acid comprising at least one monocarboxylic acid group, in particular an ester of an acid selected from acrylic acid, methacrylic acid and combinations thereof, for example styrene, vinylcaprolactam, alkyl acrylate, in particular C₁-C₁₀-alkyl acrylate, preferably C₁-C₄-alkyl acrylate, more preferably methyl acrylate, ethyl acrylate, propyl acrylate, isobutyl acrylate, n-butyl acrylate, alkyl methacrylate, in particular C₁-C₁₀-alkyl methacrylate, preferably C₁-C₄-alkyl methacrylate, more preferably methyl methacrylate, ethyl methacrylate, propyl methacrylate, isobutyl methacrylate, n-butyl methacrylate, aryl acrylate, preferably phenyl acrylate, benzyl acrylate, phenoxyethyl acrylate, aryl methacrylate, preferably phenyl methacrylate, benzyl methacrylate, phenoxyethyl methacrylate, a compound of formula (I):

R¹-(L¹)ₘ-(L²)ₙ-R² (I)

wherein:
- R¹ represents a polymerisable group selected from an acrylate group, a methacrylate group, a vinyl group, an allyl group, a methallyl group and an isoprenyl group, preferably selected from an acrylate group and a methacrylate group,
- R² represents an OH group or an OCH₃ group,
- L¹ and L², identical or different, independently represent an ethylene-oxy group or a propylene-oxy group and
- m and n, identical or different and of which at least one is different to 0, represent a number less than or equal to 150 and their sum m+n is less than 150.
Also preferably, according to the invention, the further monomer can be selected from 2-acrylamido-2-methylpropanesulfonic acid, a salt of 2-acrylamido-2-methylpropanesulfonic acid, 2-(methacryloyloxy)ethanesulfonic acid, a salt of 2-(methacryloyloxy)ethanesulfonic acid, sodium methallyl sulfonate, sodium vinyl sulfonate, sodium 1-allyloxy-2-hydroxypropane sulfonate (CAS # 52556-42-0, 7732-18-5, 106-92-3, 106-89-8), allyl ether phosphate, ammonium salt, styrene sulfonate and combinations thereof.
Polymer (P) according to the invention is prepared in the presence of at least one radical-generating compound. Preferably, according to the invention, the radical-generating compound is selected from hydrogen peroxide, sodium persulfate, potassium persulfate, ammonium persulfate and combinations thereof.
According to the invention, polymer (P) can be prepared by implementing, in relation to the amount by weight of monomer, from 2% to 8% by weight, preferably from 2.5% to 7% by weight or from 2.5% to 6% by weight, of sodium hypophosphite.
Polymer (P) can also be prepared by implementing, in relation to the amount by weight of monomer, from 0.01% to 1.5% by weight, preferably from 0.01% to 1.2% by weight or from 0.05% to 1.5% by weight, more preferably from 0.05% to 1.2% by weight or from 0.1% to 1% by weight, of disodium 2,2'-(thiocarbonylbisthio)dipropanoate (DPTTC). Polymer (P) can also be prepared by implementing, in relation to the amount by weight of monomer, from 0.1% to 5% by weight of radical-generating compound or, preferably, from 0.5% to 4.5% by weight of hydrogen peroxide or from 0.1% to 4% by weight of sodium persulfate, potassium persulfate or ammonium persulfate.
In addition to water and aggregate (A), composition (C) according to the invention comprises at least one hydraulic binder (B). Preferably, according to the invention, hydraulic binder (B) is selected from cement, Portland cement, aluminous cement, calcium sulfoaluminate cement, cements as defined in EN 197-1 standard (for example CEM I cement, CEM II cement, CEM III cement, CEM IV cement and CEM V cement), slag, fly ash, gypsum (preferably calcined gypsum or anhydrite) and combinations thereof.
In composition (C) according to the invention, the respective amounts of ingredients may vary. Preferably, the invention provides a composition (C) comprising:
- from 20 to 45% by weight of water,
- from 35 to 70% by weight of aggregate (A),
- from 10 to 20% by weight of hydraulic binder (B).
More preferably, the invention provides a composition (C) comprising:
- from 30 to 40% by weight, of water,
- from 40 to 60% by weight, of ground aggregate (A),
- from 10 to 20% by weight, of hydraulic binder (B).
A preferred composition (C) according to the invention comprises 35% by weight of water, 50% by weight of ground aggregate (A) and 15% by weight of hydraulic binder (B). Composition (C) according to the invention can comprise at least one further aggregate. Preferably, the further aggregate is selected from sand, quartz sand, gravel, expanded clay, fly ash and combinations thereof.
Composition (C) according to the invention can be prepared by methods that are known as such. For example, composition (C) according to the invention can be prepared by a method comprising mixing ground aggregate (A) and binder (B) with water.
The invention allows reducing the amount of binder (B) that is employed, in comparison to a similar composition wherein aggregate (A) has not been ground in the presence of polymer (P), while maintaining the properties of composition (C), notably its mechanical properties or its rheology properties. The invention thus also provides a method for preparing an aqueous composition (C) for preparing aerated concrete or for preparing lightweight concrete, that comprises water, at least one aggregate (A) comprising a silicon dioxide comprising material, and at least one hydraulic binder (B),
whereby aggregate (A) is ground in the presence of at least one polymer (P) having a molecular weight Mw (measured by SEC) of less than 20,000 g/mol and a polymolecularity index (PI) of less than 3.5, and that is prepared by a radical polymerisation reaction in water or in a solvent, at a temperature that is equal or higher than 20°C, of at least one anionic monomer (M) comprising at least one polymerisable olefinic unsaturation and a carboxylic acid group, in the presence of at least one radical-generating compound selected from hydrogen peroxide, ammonium persulfate, tertiobutyl hydroperoxide, an alkaline metal persulfate, optionally associated with an ion selected from Fe^{II}, Fe^{III}, Cu^{I}, Cu^{II} and combinations thereof, optionally combined with at least one compound selected from sodium bisulfite, potassium bisulfite, ammonium bisulfite, sodium hypophosphite, potassium hypophosphite, ammonium hypophosphite, disodium 2,2'-(thiocarbonylbisthio)dipropanoate (DPTTC) and combinations thereof, and whereby the amount of binder (B) is reduced compared to a similar composition wherein aggregate (A) has not been ground in the presence of polymer (P).
According to the invention, the amount of binder (B) can be reduced by 1 wt.% by 2 wt.%, by 5 wt.% or by 10 wt.%, compared to a similar composition wherein aggregate (A) has not been ground in the presence of polymer (P).
The invention primarily provides an aqueous composition (C) that is used for preparing aerated concrete or for preparing lightweight concrete.
Preferably, the invention provides an aqueous composition (C1) for preparing an aerated concrete, preferably for preparing an autoclaved aerated concrete. According to the invention, composition (C1) is an aqueous composition (C) that further comprises at least one expansion agent and at least one material selected from lime, a lime comprising material and combinations thereof. More preferably, the expansion agent is combined with lime.
Preferably, according to the invention, the expansion agent is a zinc comprising material or an aluminum comprising substance. More preferably, the expansion agent is a substance selected from free metal aluminum, more preferably aluminum powder or aluminum paste, and combinations thereof. The most preferred expansion agent is free metal aluminum.
A preferred composition (C1) according to the invention comprises:
- from 20 to 45% by weight of water,
- from 35 to 65% by weight of ground aggregate (A),
- from 10 to 20% by weight of hydraulic binder (B),
- from 3 to 9.98 % by weight of lime comprising material,
- from 0.02 to 2% by weight of expansion agent.
A more preferred composition (C1) according to the invention comprises:
- from 20 to 45% by weight of water,
- from 35 to 65% by weight of ground aggregate (A),
- from 10 to 20% by weight of hydraulic binder (B),
- from 4 to 9.97% by weight of lime comprising material,
- from 0.03 to 1% by weight of expansion agent.
A preferred composition (C1) according to the invention comprises 35% by weight of water, 45% by weight of ground aggregate (A), 13% by weight of hydraulic binder (B), 6.96% by weight of lime comprising material and 0.04% by weight of expansion agent. Also preferably, the invention provides an aqueous composition (C2) for preparing a lightweight concrete, preferably for preparing a foam concrete. According to the invention, composition (C2) is an aqueous composition (C) that further comprises a foaming agent or an air-entraining agent.
Preferably, according to the invention, the foaming agent or the air-entraining agent is selected from surfactants. More preferably, according to the invention, the foaming agent is selected from sodium laureth sulfate (sodium lauryl ether sulfate or SLES), sodium lauryl sulfate (sodium dodecyl sulfate or SDS), ammonium lauryl sulfate (ALS), alpha-olefin sulfate sodium salt, sodium lauryl sulfonate, sodium dodecyl sulfonate, sodium lauryl sulfonate, ammonium dodecyl sulfonate, C₁₄-C₁₆-alpha-olefin sulfonate sodium salt , alkyl polyglycol ether sulfate, a mixture of ammonium salt in water and butylglycol, a solution of anionic and non-ionic surface active agents in water, a mixture of disunfloweroylethyl dimonium chloride and sunflower seed oil glycerides and lauryl lactyl lactate and combinations thereof.
A preferred composition (C2) according to the invention comprises:
- from 20 to 45% by weight of water,
- from 35 to 65% by weight of ground aggregate (A),
- from 10 to 20% by weight of hydraulic binder (B),
- from 5 to 10% by weight of foaming agent or air-entraining agent.

A more preferred composition (C2) according to the invention comprises:
- from 20 to 45% by weight of water,
- from 35 to 65% by weight of ground aggregate (A),
- from 11 to 20% by weight of hydraulic binder (B),
- from 5 to 9% by weight of foaming agent or air-entraining agent.
A preferred composition (C2) according to the invention comprises 35% by weight of water, 45% by weight of ground aggregate (A), 13% by weight of hydraulic binder (B) and 7% by weight of foaming agent or air-entraining agent.
In addition to aqueous compositions (C), (C1) and (C2), the invention provides compositions in a solid form, for example as dry mix compositions. Solid form compositions according to the invention can be used for preparing aqueous compositions for preparing aerated or lightweight concrete.
The solid form compositions according to the invention can be prepared starting from an aqueous composition according to the invention, by removing water from such an aqueous composition. Preferably, water is removed by filtration, by drying, by centrifugation or by combinations of such means. More preferably, water is removed by drying an aqueous composition according to the invention.
The aqueous compositions according to the invention can be used for preparing aerated or lightweight concrete. According to the invention, aerated or lightweight concrete resulting from the use of an aqueous composition according to the invention can be used for manufacturing various items. The invention thus provides an aerated concrete item and a lightweight concrete item.
Preferably, the invention provides an aerated concrete item that is an autoclaved aerated concrete item that is prepared according to a method comprising:
A- casting at least one composition (C1) according to the invention,
B- heating and pressurizing the casted composition.
More preferably, heating and pressurizing the casted composition is carried out in an autoclave reactor.
The invention also provides a lightweight concrete item that is a foamed concrete item that is prepared according to a method comprising:
A- casting at least one composition (C2) according to the invention,
B- drying the casted composition.

The compositions according to the invention allows preparing concrete items having various forms or various shapes. Preferably, the invention provides an aerated or lightweight concrete item that is selected from a block (notably a normal block, a rounded block, a U-block), a panel (notably a floor panel, a roof panel, a wall panel, a partition panel) and a lintel.
The method according to the invention is particularly advantageous in providing improved properties to ground aggregate (A). The invention thus also provides an aggregate (A) for preparing an aerated concrete composition or a lightweight concrete composition that is defined by being obtained by the method according to the invention.
Aggregate (A) according to the invention is preferably a material selected from slag, fly ash, sand, that is ground in the presence of at least one polymer (P) defined according to the invention.
The invention also provides a method for preparing an aggregate (A) according to the invention, that comprises grinding a silicon dioxide comprising material in the presence of at least one polymer (P) having a molecular weight Mw (measured by SEC) of less than 20,000 g/mol and a polymolecularity index (PI) of less than 3, and prepared by a radical polymerisation reaction in water or in a solvent, at a temperature that is equal or higher than 20°C, of at least one anionic monomer comprising at least one polymerisable olefinic unsaturation and a carboxylic acid group, in the presence of at least one radical-generating compound selected from hydrogen peroxide, ammonium persulfate, tertiobutyl hydroperoxide, an alkaline metal persulfate, optionally associated with an ion selected from Fe^{II}, Fe^{III}, Cu^{I}, Cu^{II} and combinations thereof, optionally combined with at least one compound selected from sodium bisulfite, potassium bisulfite, ammonium bisulfite, sodium hypophosphite, potassium hypophosphite, ammonium hypophosphite, disodium 2,2'-(thiocarbonylbisthio)dipropanoate (DPTTC) and combinations thereof. Advantageous, particular or preferred features of composition (C) according to the invention, allow respectively defining compositions (C1), compositions (C2), aggregates (A), concrete items and methods, that are also advantageous, particular or preferred according to the invention.

The examples provide an illustration of the various aspects of the invention.

### Preparation of polymer (P1) used according to the invention

Polymer (P1) according to the invention is prepared into a one liter glass reactor, equipped with mechanical stirring and an oil bath heating, by introducing 212 g of water and 0.08 g of a sodium salt of heptahydrated sulfate iron.
In a 500 mL beaker fitted with a metering pump, 303 g of 100% by weight acrylic acid and 15 g of water, are introduced.
25.6 g of sodium hypophosphite monohydrate dissolved in 30 g of water are introduced into a 100 mL test tube fitted with a dosing pump. 21 g of 130 V hydrogen peroxide and 35 g of water are introduced into a 100 mL test tube fitted with a dosing pump.
The reactor is heated to 95°C and acrylic acid, hypophosphite solution and hydrogen peroxide solution are added in parallel over 120 min while maintaining the temperature of the reaction medium at 95°C. Finally, the pumps are rinsed with water and the medium is heated for 60 min to 95°C.
The polymer solution is then treated up to pH 8, using sodium hydroxide 50% by weight in water, and then diluted to a dry extract of 42% by weight. Resulting polymer (P1) has a molecular weight (Mw measured by SEC) of 4,800 g/mol and an IP of 2.2.

### Preparation of ground aggregate (A) according to the invention starting from fly ash

An aqueous suspension (S1) of aggregate (A) is prepared starting from fly ash originating from fine solid particles in flue gas ash produced by fuel combustion (200 g), that is mixed with water (80 g) and polymer (P1) (2 g as dry matter) into a 0.5 L jar containing ceramic beads (type aluminum oxide, diameter 2 cm) (200 g) as grinding media. Grinding time is 5 min. Suspension (S1) has a solid content of 54%.
A comparative suspension (CS1) is prepared in the same manner without any polymer (P1). Comparative suspension (CS1) has a solid content of 54%.
A second aqueous suspension (S2) according to the invention is prepared from aggregate (A) similarly than suspension (S1) while using a reduced amount of water (35 g). Suspension (S2) according to the invention has a solid content of 64%.
According to the invention, properties of the prepared suspensions are evaluated by measuring fluidity, density and granulometry.
Fluidity is measured by flow test mold of which the diameter is 3 cm and the height is 5 cm.

Density is measured by density cup which the volume is 100 mL.
Granulometry is measured by 200 mesh sieve. The amount of aggregate particles having a size greater than 200 mesh (74 µm) is weighted.
Results are displayed in table 1.

**Table 1**

| Suspension | Fluidity (mm) | Density (g/ml) | Granulometry (wt.%) |
|---|---|---|---|
| CS1 | 180 | 1.43 | 7.4 |
| S1 | 230 | 1.43 | 6.6 |
| S2 | 190 | 1.59 | 5.5 |

Using polymer (P1) during the preparation of suspensions (S1) and (S2) according to the invention allows maintaining or improving fluidity, density and granulometry in comparison to comparative suspension (CS1).

### Preparation of ground aggregate (A) according to the invention starting from slag

An aggregate (A) aqueous suspension (S3) is prepared starting from slag originating from the by-products in the process of blast furnace iron making (200 g) that is mixed with water (160 g) and polymer (P1) (2 g as dry matter) into a 0.5 L jar containing ceramic beads (type aluminum oxide, diameter 2 cm) (300 g) as grinding media. Grinding time is 10 min. Suspension (S3) has a solid content of 54 wt.%.
A comparative suspension (CS2) is prepared in the same manner without any polymer (P1). A further comparative suspension (CS3) is prepared similarly than comparative suspension (CS2) with an increased amount of water (220 g). Suspension (CS3) has a solid content of 47 wt.%.
Properties of the prepared suspensions are evaluated by measuring fluidity, density and granulometry. Results are displayed in table 2.

**Table 2**

| Suspension | Fluidity (mm) | Density (g/ml) | Granulometry (wt.%) |
|---|---|---|---|
| CS2 | 80 | 1.47 | 13 |
| S3 | 170 | 1.47 | 11 |
| CS3 | 150 | 1.38 | 17 |

### Preparation of ground aggregate (A) according to the invention starting from sand

An aggregate (A) aqueous suspension (S4) is prepared starting from river sand (200 g) that is mixed with water (100 g) and polymer (P1) (2 g as dry matter) into a 0.5 L jar containing ceramic beads (type aluminum oxide, diameter 2 cm) (300 g) as grinding media. Grinding time is 10 min. Suspension (S4) has a solid content of 64 wt.%.

A comparative suspension (CS4) is prepared in the same manner without any polymer (P1). A further comparative suspension (CS5) is prepared similarly than comparative suspension (CS4) with an increased amount of water (160 g). Suspension (CS5) has a solid content of 54 wt.%.
Properties of the prepared suspensions are evaluated by measuring fluidity, density and granulometry. Results are displayed in table 3.

**Table 3**

| Suspension | Fluidity (mm) | Density (g/ml) | Granulometry (wt.%) |
|---|---|---|---|
| CS4 | 95 | 1.66 | 11 |
| S4 | 210 | 1.66 | 10 |
| CS5 | 210 | 1.49 | 15 |

Aerated or lightweight concrete compositions according to the invention can then be prepared by incorporating different aggregates (A) ground according to the invention, in combination with a cement binder (B) and water. Improved granulometry of aggregate suspensions prepared according to the invention allows improving properties of the concrete compositions so prepared. In particular, the reduced amount of ground aggregate particles having a size greater than 200 mesh (74 µm) in the suspension prepared while using polymer (P1), allows preparing aerated or lightweight concrete compositions having improved mechanical properties thus allowing obtaining improved concrete items. Improving granulometry of the ground aggregate also allows reducing the amount of binder that is required for obtaining an aerated or lightweight concrete composition having acceptable specifications in the manufacture of aerated or lightweight concrete items. Higher solid content of the aggregate suspension prepared according to the invention also results in aerated or lightweight concrete compositions having a reduced content in water, hence allowing a reduction in binder consumption.
In addition, improved granulometry allows reducing or eliminating poor dispersion, segregation risk or bleeding risk due to the presence of large amounts of aggregate particles having an excessive particle size.

## Claims

1. An aqueous composition (C) for preparing aerated concrete or for preparing lightweight concrete, comprising:
- water,
- at least one aggregate (A) comprising a silicon dioxide comprising material that is ground in the presence of at least one polymer (P) having a molecular weight Mw (measured by SEC) of less than 20,000 g/mol and a polymolecularity index (PI) of less than 3.5, and that is prepared by a radical polymerisation reaction in water or in a solvent, at a temperature that is equal or higher than 20°C, of at least one anionic monomer (M) comprising at least one polymerisable olefinic unsaturation and a carboxylic acid group, in the presence of at least one radical-generating compound selected from hydrogen peroxide, ammonium persulfate, tertiobutyl hydroperoxide, an alkaline metal persulfate, optionally associated with an ion selected from Fe^{II}, Fe^{III}, Cu^{I}, Cu^{II} and combinations thereof, optionally combined with at least one compound selected from sodium bisulfite, potassium bisulfite, ammonium bisulfite, sodium hypophosphite, potassium hypophosphite, ammonium hypophosphite, disodium 2,2'-(thiocarbonylbisthio)dipropanoate (DPTTC) and combinations thereof and
- at least one hydraulic binder (B).

2. The composition according to claim 1 wherein:
- aggregate (A) comprises at least 10% by weight of silicon dioxide, preferably wherein aggregate (A) is a material selected from slag, fly ash, sand and combinations thereof, or
- aggregate (A) is ground, preferably is wet ground, in the presence of at least one polymer (P), prior to its addition to the composition ; preferably aggregate (A) is ground with a sand mill, a roller mill or a bead mill; more preferably wherein aggregate (A) has an average particle size below 100 mesh (149 µm) or wherein aggregate (A) has less than 15 wt.% of particles having an average particle size above 200 mesh (74 µm).

3. The composition according to one of claims 1 or 2 wherein polymer (P):
- has a weight-average molecular weight Mw of less than 15,000 g/mol or less than 7,500 g/mol, preferably less than 6,500 g/mol, less than 6,000 g/mol, more preferably less than 5,500 g/mol or
- has a weight-average molecular weight Mw greater than 1,000 g/mol or greater than 1,200 g/mol or greater than 1,500 g/mol or
- has a polymolecularity index (PI) of less than 3.2 or less than 3 or a polymolecularity index (PI) ranging from 1.5 to 3.5, preferably from 1.5 to 3.2 or from 1.5 to 3.

4. The composition according to one of claims 1 to 3 wherein anionic monomer (M) is selected from acrylic acid, methacrylic acid, an acrylic acid salt, a methacrylic acid salt and combinations thereof, preferably acrylic acid.

5. The composition according to one of claims 1 to 4 wherein the polymerisation reaction is carried out with:
- 100% by weight of anionic monomer (M) or
- from 70% to 99.5% by weight of anionic monomer (M) and from 0.5% to 30% by weight of at least one further monomer, preferably selected from:
∘ another different anionic monomer selected from acrylic acid, methacrylic acid, itaconic acid, maleic acid, their salts, and combinations thereof,
∘ a non-ionic monomer comprising at least one polymerisable olefinic unsaturation, preferably at least one polymerisable ethylenic unsaturation and notably a polymerisable vinyl group, more preferably a non-ionic monomer selected from the esters of an acid comprising at least one monocarboxylic acid group, in particular an ester of an acid selected from acrylic acid, methacrylic acid and combinations thereof, for example styrene, vinylcaprolactam, alkyl acrylate, in particular C₁-C₁₀-alkyl acrylate, preferably C₁-C₄-alkyl acrylate, more preferably methyl acrylate, ethyl acrylate, propyl acrylate, isobutyl acrylate, n-butyl acrylate, alkyl methacrylate, in particular C₁-C₁₀-alkyl methacrylate, preferably C₁-C₄-alkyl methacrylate, more preferably methyl methacrylate, ethyl methacrylate, propyl methacrylate, isobutyl methacrylate, n-butyl methacrylate, aryl acrylate, preferably phenyl acrylate, benzyl acrylate, phenoxyethyl acrylate, aryl methacrylate, preferably phenyl methacrylate, benzyl methacrylate, phenoxyethyl methacrylate, a compound of formula (I):
R¹-(L¹)ₘ-(L²)ₙ-R² (I)
wherein:
▪ R¹ represents a polymerisable group selected from an acrylate group, a methacrylate group, a vinyl group, an allyl group, a methallyl group and an isoprenyl group, preferably selected from an acrylate group and a methacrylate group,
▪ R² represents an OH group or an OCH3 group,
▪ L¹ and L², identical or different, independently represent an ethylene-oxy group or a propylene-oxy group and
▪ m and n, identical or different and of which at least one is different to 0, represent a number less than or equal to 150 and their sum m+n is less than 150 and
o 2-acrylamido-2-methylpropanesulfonic acid, a salt of 2-acrylamido-2-methylpropanesulfonic acid, 2-(methacryloyloxy)ethanesulfonic acid, a salt of 2-(methacryloyloxy)ethanesulfonic acid, sodium methallyl sulfonate, sodium vinyl sulfonate, sodium 1-allyloxy-2-hydroxypropane sulfonate (CAS # 52556-42-0, 7732-18-5, 106-92-3, 106-89-8), allyl ether phosphate, ammonium salt, styrene sulfonate and combinations thereof.

6. The composition according to one of claims 1 to 5 comprising at least one hydraulic binder (B) selected from cement, Portland cement, aluminous cement, calcium sulfoaluminate cement, cements as defined in EN 197-1 standard (for example CEM I cement, CEM II cement, CEM III cement, CEM IV cement and CEM V cement), slag, fly ash, gypsum (preferably calcined gypsum or anhydrite) and combinations thereof.

7. The composition according to one of claims 1 to 6 comprising:
- from 20 to 45% by weight, preferably from 30 to 40% by weight, notably 35% by weight, of water,
- from 35 to 70% by weight, preferably from 40 to 60% by weight, notably 50% by weight, of ground aggregate (A),
- from 10 to 20% by weight, preferably from 10 to 20% by weight, notably 15% by weight, of hydraulic binder (B).

8. The composition according to one of claims 1 to 7 comprising at least one further aggregate, preferably selected from sand, quartz sand, gravel, expanded clay, fly ash and combinations thereof.

9. The composition according to one of claims 1 to 8 that is selected from:
- an aqueous composition (C1) for preparing an autoclaved aerated concrete and further comprising at least one expansion agent - preferably an expansion agent selected from a zinc comprising material and an aluminum comprising substance, very preferably a substance selected from free metal aluminum (and more preferably aluminum powder or aluminum paste), and combinations thereof, even more preferably free metal aluminum - and at least one material selected from lime, a lime comprising material and combinations thereof ;
- an aqueous composition (C2) for preparing a foam concrete and further comprising a foaming agent or an air-entraining agent, preferably a foaming agent - more preferably a foaming agent selected from sodium laureth sulfate (sodium lauryl ether sulfate or SLES), sodium lauryl sulfate (sodium dodecyl sulfate or SDS), ammonium lauryl sulfate (ALS), alpha-olefin sulfate sodium salt, sodium lauryl sulfonate, sodium dodecyl sulfonate, sodium lauryl sulfonate, ammonium dodecyl sulfonate, C₁₄-C₁₆-alpha-olefin sulfonate sodium salt, alkyl polyglycol ether sulfate, a mixture of ammonium salt in water and butylglycol, a solution of anionic and non-ionic surface active agents in water, a mixture of disunfloweroylethyl dimonium chloride and sunflower seed oil glycerides and lauryl lactyl lactate and combinations thereof - or an air-entraining agent selected from surfactants.

10. The composition (C1) according to claim 9 comprising:
- from 20 to 45% by weight, preferably from 20 to 45% by weight, notably 35% by weight, of water,
- from 35 to 65% by weight, preferably from 35 to 65% by weight, notably 45% by weight, of ground aggregate (A),
- from 10 to 20% by weight, preferably from 10 to 20% by weight, notably 13% by weight, of hydraulic binder (B),
- from 3 to 9.98% by weight, preferably from 4 to 9.97% by weight, notably 6.96% by weight, of lime comprising material,
- from 0.02 to 2% by weight, preferably from 0.03 to 1% by weight, notably 0.04% by weight, of expansion agent.

11. The composition (C2) according to claim 9 comprising:
- from 20 to 45% by weight, preferably from 20 to 45% by weight, notably 35% by weight, of water,
- from 35 to 65% by weight, preferably from 35 to 65% by weight, notably 45% by weight, of ground aggregate (A),
- from 10 to 20% by weight, preferably from 11 to 20% by weight, notably 13% by weight, of hydraulic binder (B),
- from 5 to 10% by weight, preferably from 5 to 9% by weight, notably 7% by weight, of foaming agent or air-entraining agent.

12. An aerated or lightweight concrete item selected from:
- an autoclaved aerated concrete item prepared according to a method comprising:
A- casting at least one composition (C1) according to one of claims 9 or 10,
B- heating and pressurizing the casted composition, preferably in an autoclave reactor, and
- a foamed concrete item prepared according to a method comprising:
A- casting at least one composition (C2) according to one of claims 9 or 11,
B- drying the casted composition,
preferably selected from a block (notably a normal block, a rounded block, a U-block), a panel (notably a floor panel, a roof panel, a wall panel, a partition panel) and a lintel.

13. An aggregate (A) for preparing an aerated concrete composition or a lightweight concrete composition, and that is defined according to one of claims 1 to 12.

14. A method for preparing an aggregate (A) according to claim 13 comprising grinding a silicon dioxide comprising material in the presence of at least one polymer (P) having a molecular weight M_{W} (measured by SEC) of less than 20,000 g/mol and a polymolecularity index (PI) of less than 3, and prepared by a radical polymerisation reaction in water or in a solvent, at a temperature that is equal or higher than 20°C, of at least one anionic monomer comprising at least one polymerisable olefinic unsaturation and a carboxylic acid group, in the presence of at least one radical-generating compound selected from hydrogen peroxide, ammonium persulfate, tertiobutyl hydroperoxide, an alkaline metal persulfate, optionally associated with an ion selected from Fe^{II}, Fe^{III}, Cu^{I}, Cu^{II} and combinations thereof, optionally combined with at least one compound selected from sodium bisulfite, potassium bisulfite, ammonium bisulfite, sodium hypophosphite, potassium hypophosphite, ammonium hypophosphite, disodium 2,2'-(thiocarbonylbisthio)dipropanoate (DPTTC) and combinations thereof.

15. A method for preparing an aqueous composition (C) for preparing aerated concrete or for preparing lightweight concrete, that comprises water, at least one aggregate (A) comprising a silicon dioxide comprising material and at least one hydraulic binder (B), whereby aggregate (A) is ground in the presence of at least one polymer (P) having a molecular weight M_{W} (measured by SEC) of less than 20,000 g/mol and a polymolecularity index (PI) of less than 3.5, and that is prepared by a radical polymerisation reaction in water or in a solvent, at a temperature that is equal or higher than 20°C, of at least one anionic monomer (M) comprising at least one polymerisable olefinic unsaturation and a carboxylic acid group, in the presence of at least one radical-generating compound selected from hydrogen peroxide, ammonium persulfate, tertiobutyl hydroperoxide, an alkaline metal persulfate, optionally associated with an ion selected from Fe^{II}, Fe^{III}, Cu^{I}, Cu^{II} and combinations thereof, optionally combined with at least one compound selected from sodium bisulfite, potassium bisulfite, ammonium bisulfite, sodium hypophosphite, potassium hypophosphite, ammonium hypophosphite, disodium 2,2'-(thiocarbonylbisthio)dipropanoate (DPTTC) and combinations thereof,
and whereby the amount of binder (B) is reduced compared to a similar composition wherein aggregate (A) has not been ground in the presence of polymer (P).
